Europäisches Patentamt

European Patent Office

Office européen des brevets

(19)

(11) Veröffentlichungsnummer : **0 019 801**
**B1**

(12) # EUROPÄISCHE PATENTSCHRIFT

(45) Veröffentlichungstag der Patentschrift :
22.06.83

(21) Anmeldenummer : 80102678.2

(22) Anmeldetag : 14.05.80

(51) Int. Cl.³ : **H 02 B   1/12**, H 02 B   1/08,
H 02 B   1/10

(54) **Elektrisches Installationsgerät mit Tragring für Unterputz-Einbau in einer Wanddose.**

(30) Priorität : 31.05.79 DEU 7915726

(43) Veröffentlichungstag der Anmeldung :
10.12.80 Patentblatt 80/25

(45) Bekanntmachung des Hinweises auf die Patenterteilung : 22.06.83 Patentblatt 83/25

(84) Benannte Vertragsstaaten :
AT BE CH FR IT LI NL SE

(56) Entgegenhaltungen :
DE A 2 420 017
DE B 1 143 884
DE B 1 221 328
DE B 1 233 454
DE C 526 002
DE C 807 209
GB A 338 118

(73) Patentinhaber : BROWN, BOVERI & CIE Aktiengesellschaft Mannheim
Kallstadter Strasse 1
D-6800 Mannheim Käfertal (DE)

(72) Erfinder : Maekler, Klaus
Eschenweg 26
D-5885 Schalksmühle (DE)
Erfinder : Mittler, Leo, Ing. grad.
Beethovenstrasse 9
D-5882 Meinerzhagen (DE)

(74) Vertreter : Kempe, Wolfgang, Dr. et al
c/o Brown, Boveri & Cie AG Postfach 351
D-6800 Mannheim 1 (DE)

## Elektrisches Installationsgerät mit Tragring für Unterputz-Einbau in einer Wanddose

Die Erfindung betrifft ein elektrisches Installationsgerät der im Oberbegriff des Anspruches 1 genannten Art.

Spritzwassergeschützte Unterputz-Installationsgeräte werden zur Zeit nur als Einzelgeräte in Spezial-Einbaudosen installiert. Derartige Gerätedosen haben, da sie mit einem in die Dose eingreifenden besonderen Dichtungskörper versehen sind, einen größeren Durchmesser als die normalen handelsüblichen Unterputz-Dosen. So beträgt der Durchmesser für die handelsüblichen Unterputzdosen etwa 58 mm und für die Spezialdosen etwa 65 mm.

Bekannt ist eine Einrichtung (DE-B-1 221 328), bei der eine gummielastische Ausgleichsbüchse, d. h. ein Dichtring mit Flansch und Kragen so in der Spezialdose angeordnet ist, daß der Flansch auf der Dose oder ggf. noch auf der Einbauwand aufliegt und sich auf dem Flansch des Dichtungsringes der Tragring des Gerätes abstützt, während der Kragen des Dichtungsringes in die Dose eingreift. Durch Dichtungslippen an Flansch und Kragen wird die Dose nach außen hin genügend abgedichtet.

Eine andere Ausbildung zeigt die DE-B-16 15 851, bei der das abzudichtende Gerät in einem weichen PVC-Topf eingesetzt ist, der in seinem Boden lediglich Durchführungen für die Zuführungsleitungen aufweist und auch einen umlaufenden Flansch besitzt, der unter dem Tragring zwischen Dose, Wand und Tragring zu liegen kommt. Eine Abkröpfung des Flansches außerhalb der Dose sorgt noch für die Abdichtung gegenüber der Abdekkung. Diese Ausbildung hat den besonderen Nachteil, daß nur Geräte mit Schraubbefestigung angeordnet werden können, während eine Spreizenbefestigung ausgeschlossen ist.

Eine weitere wassergeschützte Unterputz-Anordnung zeigen die Unterlagen des DE-U-18 38 269, welches ebenfalls die Aufnahme des Gerätes zunächst in einer gummielastischen Kappe zeigt, wobei der Flansch der Kappe sich nicht nur zwischen Dose und Tragring erstreckt, sondern auch noch umgelegt ist und über den Tragring greift, so daß der Tragring in den Flansch wie in eine umlaufende Nut eingreift. Auch diese Ausführung hat den Nachteil, daß nur Installationsgeräte mit Schraubbefestigung und nicht auch mit Spreizenbefestigung verwendet werden können.

Es ist eine weitere Unterputzanordnung bekanntgeworden, (DE-A-2 420 017) bei der in eine Wanddose ein elektrisches Installationsgerät eingebaut werden kann, wobei auf den Tragring eine Abdeckplatte aufgesetzt ist, in die eine Zentralabdeckplatte eingesetzt ist. Die Zentralabdeckplatte eingesetzt ist. Die Zentralabdeckplatte dient aber nicht der wasserdichten Abdeckung, sondern lediglich dazu die Zentralabdeckplatte bezogen auf die außerhalb befindliche Abdeckplatte und bezogen auf Gerätekombinationen exakt mittig auszurichten.

Bei allen bekannten Installationsgeräten ist gemeinsam, daß schon bei der Installation der Unterputzdosen der Installateur von vornherein bemessen muß, ob ein wassergeschütztes Installationsgerät zu installieren ist oder ein sogenanntes trockenes Installationsgerät, da sich danach die Wahl der Dose und somit auch die Größe der Ausnehmung in der Wand richtet. Es läßt sich also nachträglich keine Änderung mehr vornehmen. Darüber hinaus ist auch eine Mehrfachkombination von spritzwassergeschützten Unterputzgeräten nur durch Aneinandersetzen von Einzelgeräten möglich, so daß eine gemeinsame Abdeckung von mehreren Geräten mit einem Mittenabstand von 71 mm entsprechend der in der Bundesrepublik Deutschland geltenden Norm nicht möglich ist.

Aufgabe der Erfindung ist es daher, eine spritzwassergeschützte Anordnung von elektrischen Installationsgeräten zu schaffen, die es ermöglicht, handelsübliche, genormte Unterputzdosen mit einem Innendurchmesser von 58 mm zu verwenden, welche Unterputzdosen normalerweise für einen sogenannten trockenen Einbau dienen, so daß auch Mehrfachkombinationen mit einem vorgeschriebenen Geräte-Mittenabstand von 71 mm und einer gemeinsamen Abdeckung ausgeführt werden können.

Diese Aufgabe wird erfindungsgemäß durch die kennzeichnenden Merkmale des Anspruches 1 gelöst.

Die Erfindung sieht weiterhin vor, daß beide Dichtringe durch ein Filmscharnier verbunden in einem Stück geformt sind. Außerdem ist der zwischen Tragring und Wanddose liegende eine Dichtring auf seiner Oberseite mit den Tragring gegen Verdrehung arretierenden Nocken versehen. Fernerhin ist dieser eine Dichtring auf seiner Unterseite mit einer umlaufenden, gegen die Wand gerichteten Dichtlippe versehen. Auch der zylinderische Kragen des Dichtringes weist in seinem unteren, freien Ende gegen die Seitenwand der Wanddose gerichtete umlaufende Rippe auf. Innerhalb des Versenks der Abdeckplatte ist ferner zwischen der Versenk-Außenwand und dem gegen die Zentralplatte gerichteten Rand eine umlaufende Rinne vorgesehen.

Schließlich kann der zweite Dichtring zur Verwendung in einer Kombinationsabdeckplatte einstückig ausgebildet sein und ist dann entsprechend der Anzahl der Kombinationseinsätze mit entsprechenden Durchlässen versehen.

Der Gegenstand der Erfindung ist in der Zeichnung in einem Ausführungsbeispiel dargestellt.

Figur 1 zeigt die Kombinationsunterputz-Anordnung zweier spritzwassergeschützter Geräte unter einer gemeinsamen Abdeckplatte.

Figur 2 zeigt die beiden für ein Einzelgerät erforderlichen Dichtringe in einer einstückigen Ausbildung in Draufsicht.

Figur 3 zeigt eine Seitenansicht der einstückigen Dichtringe gemäß Fig. 2, und

Figur 4 zeigt die einstückige Ausbildung des zweiten Dichtringes für eine Mehrfach-Kombination.

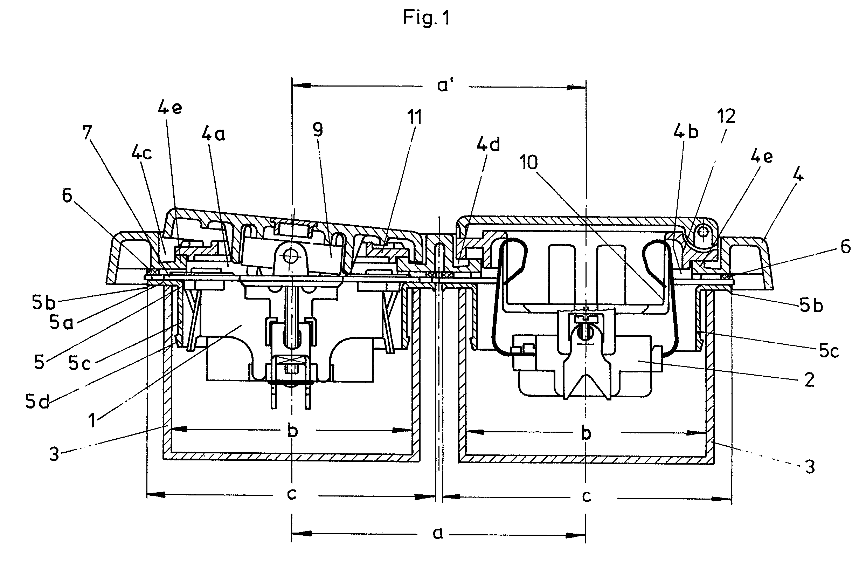

Wie Fig. 1 zeigt, besteht die erfindungsgemäße wassergeschützte Mehrfach-Unterputz-Kombination beispielsweise aus den beiden handelsüblichen Unterputz-Geräten für Schraub- und Spreizbefestigung, nämlich einem Wippschalter 1 und einer Schutzkontakt-Steckdose 2. Beide Geräte sind in einer genormten handelsüblichen Unterputzdose 3 eingebaut, welche einen Innendurchmesser b von 58 mm besitzt. Durch Verwendung dieser Unterputzdosen können diese beiden so nah in die Wand nebeneinander eingelassen werden, daß der Mittenabstand der beiden Dosen bzw. der darin eingesetzten Geräte a gleich 71 mm entsprechend der Norm beträgt. Auf diese Weise kann auch die gemeinsame Abdeckplatte 4 in bezug auf ihre Durchbrechung für den Durchtritt der Bedienungs- oder Sichtglieder den gleichen Abstand von a = 71 mm besitzen. Die Größe des Dichtringes jedes einzelnen Gerätes ist nunmehr diesen Abmessungen angepaßt, d. h. der Flansch 5a des Dichtringes 5 besitzt einen Außendurchmesser c, der gleich oder kleiner ist als das genormte Abstandmaß a von zwei benachbarten Installationsgeräten 1 und 2. Auf diese Weise überlappen sich nicht die Flansche zweier benachbarter Dichtringe, sondern gewähren im Gegenteil eine enge normgemäße Aneinanderreihung von Kombinationsgeräten : Um eine gute Abdichtung gegenüber der Einbauwand zu erhalten, besitzt der Dichtring 5 in seinem Flansch 5a noch eine Dichtlippe 5b. Eine weitere Dichtlippe 5d ist noch an dem zylinderischen Kragen 5c des Dichtringes angebracht, die evtl. Kondenz- oder sonstigen Wassertropfen ein Ableiten derselben zum Boden der Dose 3 hin ermöglicht. Der Kragen 5c umschließt das Gerät so eng wie möglich, ist aber nur so lang bemessen, daß am Gerät angeordnete Spreizen unterhalb des Kragens in die Dosenwand eingreifen können. Um eine Abdichtung auch gegenüber der Abdeckung 4 zu erzielen, ist ein zweiter Dichtring 6 zwischen Tragring 7 und Abdeckung 4 angeordnet. Dieser zweite Dichtring ist nur als flacher Ring ausgebildet, der also keinen Kragen besitzt. Damit eine gute Arretierung des Tragringes 7 gegenüber dem Dichtring 5 erfolgt, weist der Dichtring 5 an seinem Flansch noch Nocken 5e auf, die sich an den Ecken des im wesentlichen quadratischen Dichtringes befinden.

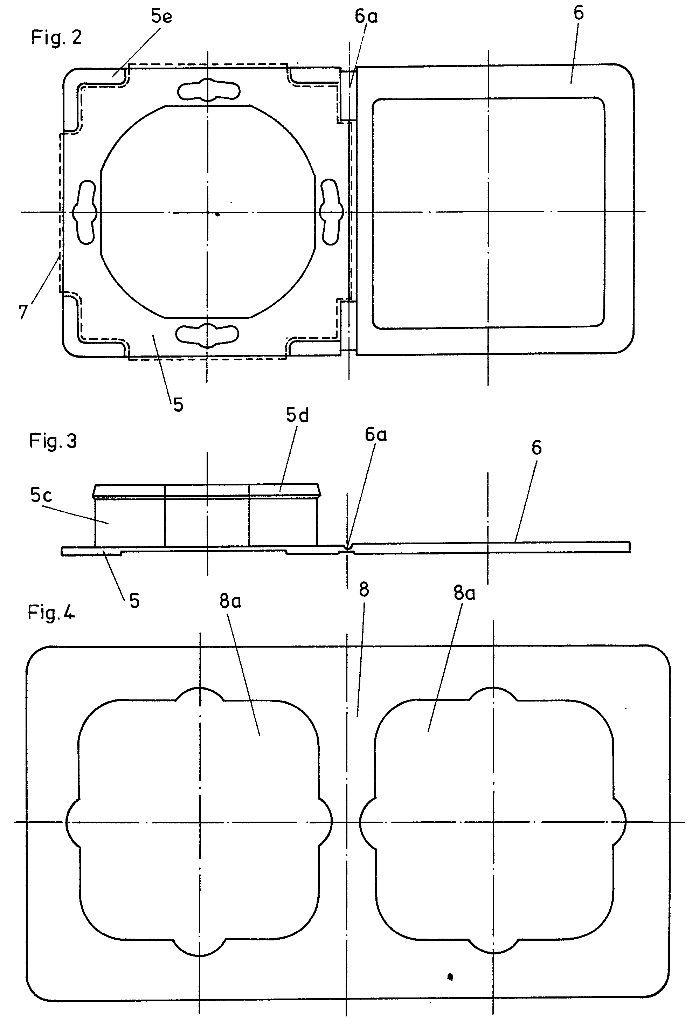

Der Dichtring 5 mit dem Dichtring 6 kann auch einteilig hergestellt sein, indem der Dichtring 6 mit dem Dichtring 5 durch ein Filmscharnier 6a verbunden ist (Fig. 2 und 3). Nach dem Einsetzen des Installationsgerätes in den Dichtring 5 wird der zweite Teil des Dichtringes, nämlich der Dichtring 6 umgeklappt, so daß dieser Teil dann auf dem Tragring 7 zu liegen kommt. Sowohl bei Einzelgeräten als auch in der Kombination kann ein solcher durch ein Filmscharnier verbundener Doppelring jeweils für ein Gerät verwendet werden ; es kann aber auch für jedes Gerät ein separater Dichtring 5 in Anwendung kommen, während der Dichtring 6 für die gesamte Kombination einstückig ausgebildet ist, wie dies die Fig. 4 zeigt. Dann besitzt dieser Dichtring 6 eine solche Größe, daß er entsprechend der Anzahl der kombinierten Geräte auch eine entsprechende Anzahl von Durchbrüchen 8a aufweist und dieser Ring 8 nun passend für den Einsatz in die entsprechende Abdeckplatte 4 ausgelegt ist. Die Durchbrüche 4a und 4b der Abdeckplatte 4 zum Durchtritt der Betätigungsglieder 9 für einen Schalter oder der Sichtglieder 10 für eine Steckdose werden begrenzt durch einen sich in einem Versenk befindlichen Rand 4e, auf dem die jeweilige den Durchbruch abdeckende Zentralplatte 11 bzw. 12 flächig aufliegt. Durch diese Ausbildung ist auch von der Stirnseite der Kombination her ein Dichtungsabschluß erreicht, wobei sich evtl. doch noch ansammelnde Feuchtigkeit in den Versenkrinnen 4c bzw. 4d aufgefangen wird.

Aufgrund der neuen Einrichtung ist es möglich, auch wassergeschützte Geräte entsprechend der Norm in Mehrfach-Kombinationen zusammenzufassen und dabei genormte Unterputzdosen zu verwenden. Selbst wenn eine wassergeschützte Installation nachinstalliert werden soll, können die bereits installierten Unterputzdosen für Trockeninstallation dafür benutzt werden.

## Ansprüche

1. Elektrisches Installationsgerät mit Tragring für Unterputz-Einbau in einer Wanddose, mit einem aus elastischem Material bestehenden Dichtring, der den Tragring mittels eines Flansches gegenüber der Wanddose abdichtet und der mit einem zylindrischen Kragen in die Wanddose eingreift dadurch gekennzeichnet, daß der Dichtring (5) so bemessen ist, daß er in Wanddosen (3) mit dem genormten Innendurchmesser von 58 mm einsetzbar ist und sein Flansch (5a) über den Rand einer solchen Wanddose (3) hinausragt, aber nur soweit, daß sich die Flansche (5a) bei zwei benachbarten Wanddosen (3), deren genormter Mittenabstand 71 mm beträgt, nicht überlappen und der zylindrische Kragen (5c) den Geräteeinsatz (1 oder 2) an seinen der Wanddose (3) am nächsten kommenden äußeren Kanten unmittelbar umschließt, daß ein zweiter jedoch kragenloser Dichtring (6) zwischen dem Tragring (7) und einer Abdeckplatte (4) angeordnet ist, und in der Abdeckplatte (4) mindestens ein Versenk ausgebildet ist, in dem eine Zentralabdeckplatte (11, 12) einliegt und die Zentralabdeckplatte (11, 12) auf einem einen inneren Durchbruch (4a, 4b) der Abdeckplatte (4) begrenzenden Rand (4c) flächig aufliegt.

2. Elektrisches Installationsgerät nach Anspruch 1, dadurch gekennzeichnet, daß beide Dichtringe (5, 6) durch ein Filmscharnier (6a) verbunden in einem Stück geformt sind.

3. Elektrisches Installationsgerät nach einem der Ansprüche 1 bis 2, dadurch gekennzeichnet, daß der zwischen Tragring (7) und Wanddose (3) liegende eine Dichtring (5) auf seiner Oberseite mit den Tragring (7) gegen Verdrehung arretierenden Nocken (5e) versehen ist.

4. Elektrisches Installationsgerät nach einem der Ansprüche 1 bis 3, dadurch gekennzeichnet, daß der zwischen Tragring (7) und Wanddose (3) liegende eine Dichtring (5) auf seiner Unterseite mit einer umlaufenden gegen die Wand gerichteten Dichtlippe (5b) versehen ist.

5. Elektrisches Installationsgerät nach einem der Ansprüche 1 bis 4, dadurch gekennzeichnet, daß der zylinderische Kragen (5c) des Dichtringes (5) an seinem unteren, freien Ende mit einer gegen die Seitenwand der Wanddose gerichteten, umlaufenden Rippe (5d) versehen ist.

6. Elektrisches Installationsgerät, nach einem der Ansprüche 1 bis 5, dadurch gekennzeichnet, daß innerhalb des Versenks der Abdeckplatte (4) zwischen der Versenkaußenwand und dem gegen die Zentralabdeckplatte (11, 12) gerichteten Rand eine umlaufende Rinne (4c, 4d) vorgesehen ist.

7. Elektrisches Installationsgerät nach Anspruch 1, dadurch gekennzeichnet, daß der zweite Dichtring (6) zur Verwendung in einer Abdeckplatte (4) für eine Kombination einstükkig (8) ausgebildet ist und entsprechend der Anzahl der Kombinations-Einsätze mit entsprechenden Durchlässen (8a) versehen ist.

## Claims

1. An electrical installation device with a support ring for flush mounting in a wall box and comprising a sealing ring which consists of resilient material and comprises a flange which seals the support ring against the wall box and a cylindrical collar which engages in the wall box, characterized in that the sealing ring (5) is so dimensioned that it may be inserted into wall boxes (3) with the standardized internal width of 58 mm and its flange (5a) projects beyond the edge of such a wall box (3) but only so far that the flanges (5a) do not overlap in the case of two adjacent wall boxes (3) at the standardized centre-to-centre distance of 71 mm, and the cylindrical collar (5c) directly surrounds the inserted device (1 or 2) at its outer edges coming closest to the wall box (3), a second, but collarless, sealing ring (6) is interposed between the support ring (7) and a cover plate (4), and there is formed in the cover plate (4) at least one recessed portion in which a central cover plate (11, 12) is fitted and the central cover plate (11, 12) rests in surface contact on an edge (4e) defining an internal opening (4a, 4b) in the cover plate (4).

2. An electrical installation device according to Claim 1, characterized in that the two sealing rings (5, 6) are formed in one piece, joined by a film hinge (6a).

3. An electrical installation device according to one of Claims 1 and 2, characterized in that the upper side of one sealing ring (5) interposed between the support ring (7) and the wall box (3) is provided with studs (5e) engaging the support ring (7) to prevent rotation.

4. An electrical installation device according to any one of Claims 1 to 3, characterized in that the underside of one sealing ring (5) interposed between the support ring (7) and the wall box (3) is provided with a peripheral sealing lip facing the wall.

5. An electrical installation device according to any one of Claims 1 to 4, characterized in that the lower free end of the cylindrical collar (5c) of the sealing ring is provided with a peripheral rib (5d) facing towards the side wall of the wall box.

6. An electrical installation device according to any one of Claims 1 to 5, characterized in that a peripheral groove (4c, 4d) is provided inside the recessed portion of the cover plate (4) between the outer wall of the recessed portion and the edge facing the central cover plate (11, 12).

7. An electrical installation device according to Claim 1, characterized in that the second sealing ring 6 is formed in one piece (8) for use in a cover plate (4) for a combination and is provided with respective openings (8a) corresponding to the number of fittings in the combination.

## Revendications

1. Elément d'installation électrique comportant un anneau porteur destiné à un montage encastré dans une boîte murale, ayant un anneau d'étanchéité constitué par une matière élastique, qui étanchéifie l'anneau porteur par rapport à la boîte murale au moyen d'une collerette et qui s'engage dans la boîte murale avec un collet cylindrique, caractérisé en ce que l'anneau d'étanchéité (5) est prévu de manière à pouvoir être introduit dans des boîtes murales (3) ayant un diamètre interne normalisé de 58 mm et que son collet (5a) dépasse au-dessus du bord d'une telle boîte murale (3), mais seulement suffisamment pour que les collets (5a) ne se chevauchent pas dans le cas de deux boîtes murales voisines (3) dont l'écartement central normalisé est de 71 mm et que le collet cylindrique (5c) entoure directement le composant de l'élément (1 ou 2) sur ses bords externes les plus proches de la boîte murale (3), et en ce qu'un deuxième anneau d'étanchéité (6), cependant sans collet, est disposé entre l'anneau porteur (7) et une plaque couvercle (4) dans laquelle est réalisé au moins un renfoncement où se trouve une plaque centrale de couverture (11, 12) qui repose à plat sur un bord (4c) délimitant un percement interne (4a, 4b) de la plaque couvercle (4).

2. Elément d'installation électrique selon la revendication 1, caractérisé en ce que les deux anneaux d'étanchéité (5, 6) sont réalisés en une seule pièce et reliés par une charnière formant pellicule (6a).

3. Elément d'installation électrique selon l'une des revendications 1 et 2, caractérisé en ce que l'anneau d'étanchéité (5) se trouvant entre l'anneau porteur (7) et la boîte murale (3) est muni sur son côté supérieur d'ergots (5e) verrouillant l'anneau porteur (7) contre toute rotation.

4. Elément d'installation électrique selon l'une des revendications 1 à 3, caractérisé en ce que l'un des anneaux d'étanchéité (5) se trouvant entre l'anneau porteur (7) et la boîte murale (3) est muni sur son côté inférieur d'une languette d'étanchéité (5b) périphérique dirigée contre la paroi.

5. Elément d'installation électrique selon l'une des revendications 1 à 4, caractérisé en ce que le collet cylindrique (5c) de l'anneau d'étanchéité (5) est muni à son extrémité inférieure libre d'une nervure (5d) périphérique dirigée contre la paroi latérale de la boîte murale.

6. Elément d'installation électrique selon l'une des revendications 1 à 5, caractérisé en ce qu'on prévoit une nervure périphérique (4c, 4d) à l'intérieur du renfoncement de la plaque couvercle (4) entre la paroi externe de renfoncement et le bord dirigé vers la plaque centrale de couverture (11, 12).

7. Elément d'installation électrique selon la revendication 1, caractérisé en ce que le deuxième anneau d'étanchéité (6) est réalisé en une seule pièce (8) pour une utilisation dans une plaque couvercle (4) destinée à une combinaison et est muni, en fonction du nombre des composants de la combinaison, de passages (8a) correspondants.

Fig. 1

Fig. 2

5e

6a

6

7

5

Fig. 3

5d

6a

6

5c

5

8a

8

8a

Fig. 4

2